# EUROPEAN PATENT APPLICATION

(11) **EP 4 016 374 A1**
(43) Date of publication of application: **22.06.2022**
(21) Application number: 20215613.9
(22) Date of filing: 18.12.2020
(51) Int. Cl.: G06K 7/14, G06K 19/06

(54) **METHOD FOR EXTRACTING DATA FROM A FOOD PACKAGE, FOOD PACKAGE AND SYSTEM FOR PRODUCING A FOOD PACKAGE**

(71) Applicant: Tetra Laval Holdings & Finance S.A., 1009 Pully (CH)
(72) Inventor: SCARABELLI, Paolo, 42020 Reggio Emilia (IT); BERGHOLTZ, Lars, 263 51 Höganäs (SE); PALM, Lars, 232 52 Åkarp (SE); VICINI, Stefano, 41058 Vignola (IT)
(74) Representative: Tetra Pak - Patent Attorneys SE

(57) **Abstract**

A method (300) for extracting data from a food package (102) using a two dimensional (2D) code (104) provided on the food package (102) is provided. The 2D code (104) comprises a primary section (202) and a secondary section (204), wherein the primary section (202) comprises a primary finder pattern (206a-c) and the secondary section (204) comprises a secondary finder pattern (208), wherein the primary and secondary finder patterns (206a-c, 208) are configured such that a mirrored finder pattern is distinguishable from a non-mirrored finder pattern, wherein the secondary section (204) is mirrored. The method (300) comprises capturing (302) image data of the food package (102) comprising the 2D code (104), reading (304) the primary section (202) from the image data using the primary finder pattern (206a-c), extracting (306) primary data from the primary section (202), mirroring (308) the captured image data, reading (310) the secondary section (204) from the mirrored image data using the secondary finder pattern (208),extracting (312) secondary data from the secondary section (204).

## Description

### Technical Field

The invention relates to packaging technology. More particularly, it is related to a method for extracting data from a food package.

### Background Art

Today, within the food industry, identification and traceability of food packages are important for producers, distributors, retailers and consumers. Information such as origin, place and date of manufacturing, expiration date and contents of the product are often printed on the food package. Such information are typically of interest for the consumer. Further information such as a unique identifier may be important for the producer for enabling traceability during and after production.

However, there is limited space on the food package for printing the information. Further, different people may want to access different information which by today's solutions can be difficult. In light of the above, there is need for improved solutions providing and extracting information on food packages.

### Summary

It is an object of the invention to at least partly overcome one or more of the above-identified limitations of the prior art. In particular, it is an object to provide improved solutions for providing and extracting data from food packages.

It has been realized that by combining multiple scannable codes, a more spatially compact solution is achieved. Furthermore, it allows for the data to be targeted for the user, depending on what device the user uses. However, it is not as simple as providing for instance two QR-codes next to each other, since a reader would just read

According to a first aspect, it is provided a method for extracting data from a food package using a two dimensional, 2D, code provided on the food package, wherein the 2D code may comprise a primary section and a secondary section, wherein the primary section may comprise a primary finder pattern and the secondary section may comprise a secondary finder pattern, wherein the primary and secondary finder patterns may be configured such that a mirrored finder pattern is distinguishable from a non-mirrored finder pattern, wherein the secondary section may be mirrored. The method may comprise capturing image data of the food package comprising the 2D code, reading the primary section from the image data using the primary finder pattern, extracting primary data from the primary section, mirroring the captured image data, reading the secondary section from the mirrored image data using the secondary finder pattern, extracting secondary data from the secondary section.

The method may be performed by a user device. The user device may be a mobile device, such as a smartphone or any other device suitable for the purpose.

The extracted data may be information regarding the food package or product held therein. Alternatively, the extracted data may be instructions to the user device that is used to extract the data, to launch an application or open a website on the user device.

The primary section and the secondary section may be interpreted as two individual 2D codes. The two individual 2D codes may be put together to form the 2D code on the food package, while still being readable as individual codes.

The finder patterns may be interpreted as sub parts of the primary and secondary section respectively, which can be used to identify the location of the sections. The finder patterns being distinguishable between a mirrored and a non-mirrored state, may be interpreted as the finder pattern, when mirrored, being unreadable for a user device or that it in any other way indicates to the user device that it shouldn't be read. Thus, two codes may be provided together and captured in the same image data while still being readable individually. Further, it may be possible to choose which code to read, as opposed to when two ordinary QR codes are put next to each other.

Alternatively, the primary section may be provided on the food package mirrored while the secondary section is not. In that case, the secondary section may be read, and secondary data be extracted, prior to mirroring the image data. In addition, the primary section may be read, and primary data be extracted after mirroring the image data.

The disclosed method may be advantageous that the primary section and the secondary section can be read independently even though they are captured together in the image data.

The primary finder pattern and the secondary finder pattern may be rotational-invariant. Put differently, the primary and secondary sections can be read even though they are rotated. This may be advantageous in that the image data of the 2D code may be captured in any angle.

The secondary section may be located within the primary section. Put differently, the secondary section may be embedded within the primary section. For instance, the secondary section may be provided in the center of the primary section.

Having the secondary section embedded within the primary section may be advantageous in that a more compact 2D code can be achieved. Thus, valuable space on the food package can be saved. Further, having the secondary section within the primary section makes it easier for the user to find the right information, since all codes are collected at the same place, as opposed to having the two different sections provided on different sides of the package.

The primary section and/or the secondary section may be a quick response, QR, code or a data matrix code. Put differently, the primary section and the secondary section may be QR codes. Alternatively, the primary section and the secondary section may be data matrix codes. Alternatively, the primary section may be a QR code while the secondary section may be a data matrix code. Alternatively, the primary section may be a data matrix code while the secondary section may be a QR code.

The primary section and/or the secondary section may be printed using magnetic ink. This may be advantageous in that an additional way of storing data on the 2D code is provided. For instance, if printing with the magnetic ink, the 2D code can be read both by a camera, capturing image data that can be used for identifying the 2D code, and by a magnetic reader using magnetic properties of the magnetic ink to read the 2D code. Still an option is to use the camera, or other optical reader, and the magnetic reader in combination. For instance, the magnetic reader may be used for determining a location of the 2D code and the camera may be used for reading the 2D code, or vice versa.

Still an option is to provide an additional layer of information by using the magnetic ink. For instance, the magnetic ink can be used both for providing the 2D code that can be read by the camera, but also providing information that can be read by the magnetic reader, but not the camera. This may for instance be achieved by having magnetic ink print made in the same color as a background such that this cannot be read by the camera and magnetic ink print made in a different color than the background such that this can be read by the camera.

The primary data may be common for all packages of the same batch. The primary data may be related to information regarding the food product.

The secondary data may be package specific. For instance, the secondary data may be a unique identifier of the food package it is printed on.

The primary section may be printed using offset printing. Further, the secondary section may be printed on-site using inkjet printing or laser printing. Put differently, the primary section and the secondary section may be printed on different occasions. Further, they may be printed using different printing techniques.

According to a second aspect, a non-transitory computer-readable storage medium is provided. The non-transitory computer-readable storage medium may have stored thereon program code portions for implementing the method according to the first aspect when executed on a device having processing capabilities.

According to a third aspect, a food package is provided. The food package may comprise a 2D code, wherein the 2D code may comprise a primary section and a secondary section, wherein the primary section may comprise a primary finder pattern and the secondary section may comprise a secondary finder pattern, wherein the primary and secondary finder patterns may be configured such that a mirrored finder pattern is distinguishable from a non-mirrored finder pattern, wherein the secondary section may be mirrored.

The secondary section may be located within the primary section.

The primary section and/or the secondary section may be a QR code or a data matrix code.

The primary section and/or the secondary section may be printed using magnetic ink.

According to a fourth aspect, a system for producing a food package enabled for extracting data from the food package using a two dimensional (2D) code is provided. The 2D code may comprise a primary section and a secondary section, wherein the primary section may comprise a primary finder pattern and the secondary section may comprise a secondary finder pattern, wherein the finder patterns may be configured such that a mirrored finder pattern is distinguishable from a non-mirrored finder pattern. The system may comprise a reel of packaging material having printed thereon the primary section, a roll fed packaging machine, for producing filled and sealed food packages, a reading device for reading the primary section of the 2D code, and a printing device for printing the secondary section on the primary section, wherein the secondary section may be printed mirrored.

The printing device may be an inkjet printing device or a laser printing device. The printing device may be a printing device already present in the roll fed packaging machine, such as the printing device for printing expiration dates on the food packages.

Still other objectives, features, aspects and advantages of the invention will appear from the following detailed description as well as from the drawings. The same features and advantages described with respect to one aspect are applicable to the other aspects unless explicitly stated otherwise.

### Brief Description of the Drawings

Embodiments of the invention will now be described, by way of example, with reference to the accompanying schematic drawings, in which
Fig. 1 illustrates, by way of example, a user device extracting data from a food package with a 2D code.
Fig. 2 illustrates a food package provided with a 2D code.
Fig. 3 is a flow-chart illustrating the steps of a method for extracting data from a food package.
Fig. 4 illustrates a system for producing a food package enabled for extracting data from the food package.

### Detailed description

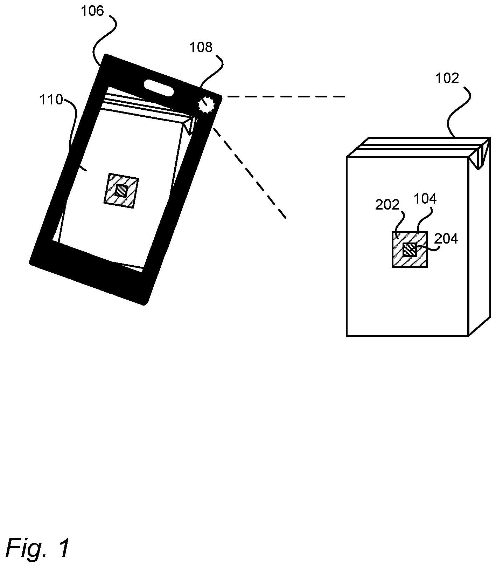

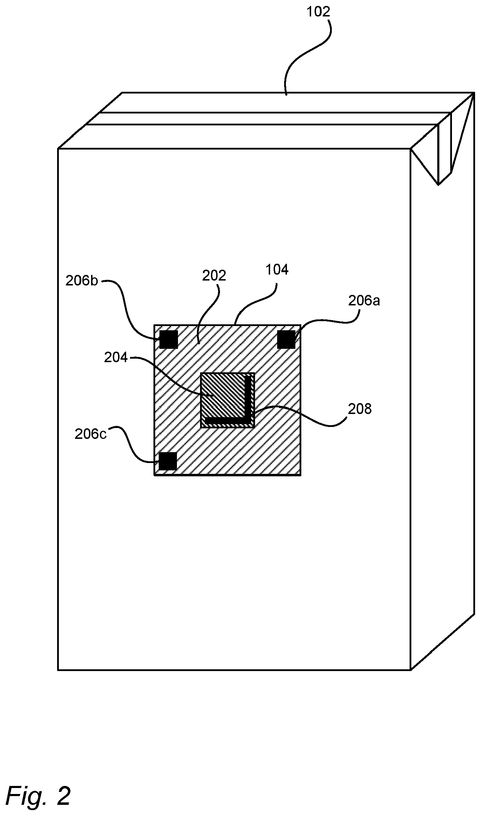

Fig. 1 illustrates an exemplifying use-case of a user device 106 extracting data from a food package 102 with a two-dimensional, 2D, code 104. The 2D code 104 comprises a primary section 202 and a secondary section 204. The food package 102 with the 2D code 104 is described in more detail in connection to Fig. 2.

The user device 106 may be any device having the possibility to capture image data and having processing capabilities. Further, the user device 106 may be provided with a screen 110 for visualizing the extracted data. The user device 106 may be a mobile device, or a device mounted in a roll-fed packaging machine 404. Different user devices may be used depending on what data the user is interested in.

Herein, the user device 106 is illustrated as a mobile phone or smart phone, having a camera 108 and a screen 110. It may illustrate a case of a consumer scanning the food package 102 with their phone to extract data from the primary section 202 of the 2D code 104. Alternatively, the user device 106 may be configured to extract data from both the primary and secondary section 202, 204 of the 2D code 104, or just the secondary section 204.

Fig. 2 illustrates, by way of example, the food package 102 comprising the 2D code 104. The illustration of the food package 102 and 2D code 104 should be viewed as a non-limiting example and as a simplified view for illustrative purposes. For instance, the scale of the food package 102 and the 2D code 104 may be different. Further, the 2D code 104 may be placed on any side of the food package 102.

The 2D code 104 may comprise the primary and secondary section 202, 204. Herein, the secondary section 204 is provided in the center of the primary section 202. The secondary section 204 may be smaller than the primary section 202 such that it can be placed within the primary section 202 and still allowing the primary section 202 to be read. In another example, the secondary section 204 may be provided outside of the primary section 202.

The primary section 202 may be a quick response (QR) code. Alternatively, the primary section 202 may be a data matrix code. Similarly, the secondary section 204 may be a QR code. Alternatively, the secondary section 204 may be a data matrix code.

The primary section 202 may comprise a primary finder pattern 206a-c. Herein, the primary finder pattern 206a-c is illustrated as three squares placed in the corners of the primary section 202. However, this should be interpreted as a non-limiting example. Similarly, the secondary section 204 may comprise a secondary finder pattern 208. Herein the secondary finder pattern 208 is illustrated as a mirrored L-shaped pattern. Again, this should be seen as a non-limiting example.

The primary and secondary finder pattern 206a-c, 208 may be QR code finder patterns or data matrix code finder patterns depending on what type of code the primary and secondary section 202, 204 are, respectively.

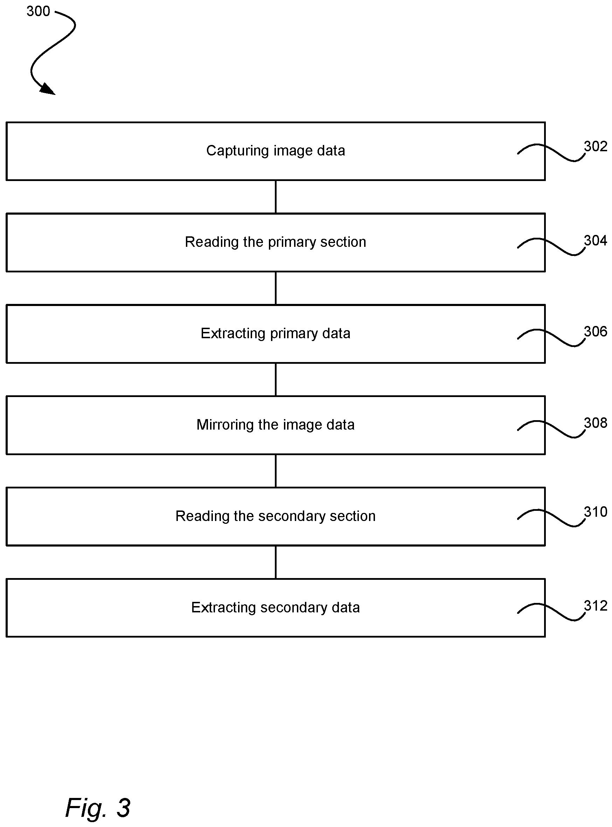

Fig. 3 is a flow chart illustrating the steps of a method 300 for extracting data from the food package 102 using the 2D code 104 provided on the food package 102, wherein the 2D code 104 may comprise the primary section 202 and the secondary section 204, wherein the primary section 202 may comprise the primary finder pattern 206a-c and the secondary section 204 may comprise the secondary finder pattern 208, wherein the primary and secondary finder pattern 206a-c, 208 may be configured such that a mirrored finder pattern is distinguishable from a non-mirrored finder pattern, wherein the secondary section 204 may be mirrored.

In a first step 302, image data of the food package 102 comprising the 2D code 104 may be captured.

In a second step 304, the primary section 202 may be read from the image data using the primary finder pattern 206a-c.

In a third step 306, primary data may be extracted from the primary section 202.

In a fourth step 308, the captured image data may be mirrored.

In a fifth step 310, the secondary section 204 may be read from the mirrored image data using the secondary finder pattern 208.

In a sixth step 312, secondary data may be extracted from the secondary section 204.

Even though described in a certain order, the different steps may also be performed in other orders, as well as multiple times.

In a case only the secondary data is of interest, the second 304 and third 306 step may be omitted. Similarly, if only the primary data is of interest, the fourth 308, fifth 310 and sixth 312 step may be omitted.

The secondary section 204 may be inverted, as an alternative to mirroring. An example of inverting may be changing all black pixels to white, and white pixels to black, in a black and white image. Put differently, inverting the pixel scale, such that the pixels are changed to a value on the opposite side of the scale. The primary and secondary finder pattern 206a-c, 208 may be configured such that an inverted finder pattern may be distinguishable from a non-inverted finder pattern. The captured image data may be inverted. The secondary section 204 may be read from the inverted image data using the secondary finder pattern 208. The secondary image data may be extracted from the secondary section 204.

In a more general case, any transformation may be used, of which mirroring and inverting are just two examples. It may be any transformation such that when the transformation is applied twice, the same image is obtained as before applying the two transformations.

The 2D code 104 may comprise up to four sections, the primary section 202 being non-mirrored and non-inverted, the secondary section 204 being mirrored and non-inverted, a tertiary section being non-mirrored and inverted, and a quaternary section being mirrored and inverted. The up to four sections may be read individually by mirroring and/or inverting image data in accordance with above.

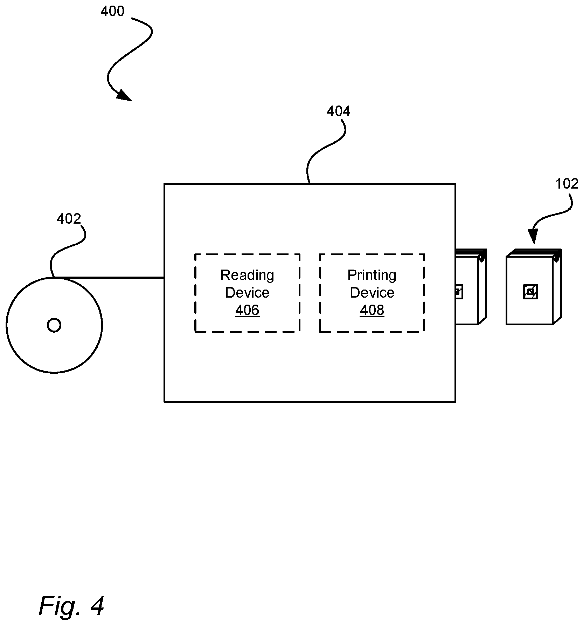

Fig. 4 illustrates, by way of example, a system 400 for producing the food package 102 enabled for extracting data from the food package 102 using the 2D code 104. The 2D code 104 may comprise the primary section 202 and the secondary section 204. The primary section 202 may comprise the primary finder pattern 206a-c and the secondary section 204 may comprise the secondary finder pattern 208. The finder patterns may be configured such that a mirrored finder pattern is distinguishable from a non-mirrored finder pattern. The food package 102 may be the food package 102 as discussed in more detail in connection to Fig. 2.

The system 400 may comprise a reel of packaging material 402. The primary section 202 of the 2D code 104 may be printed on the reel of packaging material 402. Put differently, the primary section 202 may be printed on the packaging material in the same time as the decor is printed.

The system 400 may further comprise a roll fed packaging machine 404. The roll fed packaging machine 404 may be any ordinary roll fed packaging machine. The reel of packaging material 402 may be fed into the roll fed packaging machine 404 which then forms, fills and seals the food packages. The system 400 may further comprise a reading device 406 for reading 2D codes. The reading device 406 may be provided within the roll fed packaging machine 404 as herein illustrated. Alternatively, the reading device 406 may be provided after roll fed packaging machine 404. The reading device 406 may be configured to read the primary section 202 of the produced food packages. Thus, the 2D codes can be identified. The system 400 may further comprise a printing device 408. The printing device 408 may be provided within the roll fed packaging machine 404 as herein illustrated. Alternatively, it may be provided after the roll fed packaging machine 404. The printing device 408 may be configured to print the secondary section 204, based on the location of the primary section 202 identified by the reading device 406. The secondary section 204 may be printed mirrored. The printing device 408 can use inkjet printing or laser printing. The secondary section may then be printed on-site, at the same location as the food packages are produced.

From the description above follows that, although various embodiments of the invention have been described and shown, the invention is not restricted thereto, but may also be embodied in other ways within the scope of the subject-matter defined in the following claims.

## Claims

1. A method (300) for extracting data from a food package (102) using a two dimensional (2D) code (104) provided on the food package (102), wherein the 2D code (104) comprises a primary section (202) and a secondary section (204), wherein the primary section (202) comprises a primary finder pattern (206a-c) and the secondary section (204) comprises a secondary finder pattern (208), wherein the primary and secondary finder patterns (206a-c, 208) are configured such that a mirrored finder pattern is distinguishable from a non-mirrored finder pattern, wherein the secondary section (204) is mirrored, the method (300) comprising:
capturing (302) image data of the food package (102) comprising the 2D code (104),
reading (304) the primary section (202) from the image data using the primary finder pattern (206a-c),
extracting (306) primary data from the primary section (202),
mirroring (308) the captured image data,
reading (310) the secondary section (204) from the mirrored image data using the secondary finder pattern (208),
extracting (312) secondary data from the secondary section (204).

2. The method (300) according to claim 1, wherein the primary finder pattern (206a-c) and the secondary finder pattern (208) are rotational-invariant.

3. The method (300) according to any of the preceding claims, wherein the secondary section (204) is located within the primary section (202).

4. The method (300) according to any of the preceding claims, wherein the primary section (202) and/or the secondary section (204) are a quick response (QR) code or a data matrix code.

5. The method (300) according to any of the preceding claims, wherein the primary section (202) and/or the secondary section (204) is printed using magnetic ink.

6. The method (300) according to any of the preceding claims, wherein the primary data is common for all packages of the same batch.

7. The method (300) according to any of the preceding claims, wherein the secondary data is package specific.

8. The method (300) according to any of the preceding claims, wherein the primary section (202) is printed using offset printing, and the secondary section (204) is printed on-site using inkjet printing or laser printing.

9. A non-transitory computer-readable storage medium having stored thereon program code portions for implementing the method (300) according to any one of claims 1-8 when executed on a device having processing capabilities.

10. A food package (102) comprising a two dimensional (2D) code (104),
wherein the 2D code (104) comprises a primary section (202) and a secondary section (204),
wherein the primary section (202) comprises a primary finder pattern (206a-c) and the secondary section (204) comprises a secondary finder pattern (208),
wherein the primary and secondary finder patterns (206a-c, 208) are configured such that a mirrored finder pattern is distinguishable from a non-mirrored finder pattern,
wherein the secondary section (204) is mirrored.

11. The food package (102) according to claim 10, wherein the secondary section (204) is located within the primary section (202).

12. The food package (102) according to any of the claims 10 to 11, wherein the primary section (202) and/or the secondary section (204) are a quick response (QR) code or a data matrix code.

13. The food package (102) according to any of the claims 10 to 12, wherein the primary section (202) and/or the secondary section (204) is printed using magnetic ink.

14. A system (400) for producing a food package (102) enabled for extracting data from the food package (102) using a two dimensional (2D) code, wherein the 2D code comprises a primary section (202) and a secondary section (204), wherein the primary section (202) comprises a primary finder pattern (206a-c) and the secondary section (204) comprises a secondary finder pattern (208), wherein the finder patterns are configured such that a mirrored finder pattern is distinguishable from a non-mirrored finder pattern, the system comprising,
a reel of packaging material (402) having printed thereon the primary section (202),
a roll fed packaging machine (404), for producing filled and sealed food packages,
a reading device (406) for reading the primary section (202) of the 2D code, and
a printing device (408) for printing the secondary section (204) on the primary section (202), wherein the secondary section (204) is printed mirrored.

15. The system (400) according to claim 14, wherein the printing device (408) is an inkjet printing device or a laser printing device.
